# EUROPÄISCHE PATENTSCHRIFT

(11) **EP 1 776 855 B1**
(45) Veröffentlichungstag und Bekanntmachung des Hinweises auf die Patenterteilung: **02.09.2009**
(21) Anmeldenummer: 06021410.3
(22) Anmeldetag: 12.10.2006
(51) Int. Cl.: A01D 34/66

(54) **Scheibenmähwerk**
Disc cutter bar
Barre de coupe à disques

(30) Priorität: 18.10.2005 DE 102005050188
(43) Veröffentlichungstag der Anmeldung: 25.04.2007
(73) Patentinhaber: CLAAS Saulgau GmbH, 88348 Bad Saulgau (DE)
(72) Erfinder: Prenzler, Jürgen, 88379 Oberwaldhausen (DE)

(56) Entgegenhaltungen:
- EP-A- 0 965 258
- FR-A1- 2 840 765

## Beschreibung

Die Erfindung betrifft einen Mähbalken für Scheibenmähwerke zur Verbesserung der Schnittqualität, insbesondere für die Grünfutteremte, in der Landwirtschaft gemäß dem Oberbegriff des unabhängigen Anspruchs 1.

Derartige Mähwerke gibt es in vielfältigen Variationen, wie beispielsweise Heck-, Selten-, Front- oder gezogene Mähwerke, oder Kombinationen aus vorgenannten Mähwerken und auch für selbstfahrende Mähwerke, oder auch für Direktfutterschneldwerke für Feldhäcksier.

### Stand der Technik

Bekannt sind Schelbenmähwerke mit umlaufenden Mähwerkzeugen, deren Mähklingen frei- bzw. schwenkbewegllch am Umfang der Mähschelben an einem Zapfen aufgehängt sind. Die Mähklingen werden erst durch die Zentrifugalkraft stabilisiert und mähen das Grünfutter dann ohne Gegenschneide ab. Dabei sind die Mähscheiben antriebsseitig mit dem Motor eines Trägerfahrzeugs verbunden und zugleich in einer Antriebskette, bestehend aus Zahnrädern, welche unterhalb der Mähscheiben in einem geschlossenen Getriebegehäuse gelagert und untergebracht sind, eingebunden. Aus der EP 0 965 258 A1 und der FR 2840765 A1 sind Mähwerke mit aus plattenförmigen Blechtellen geformten Getriebegehäuse bekannt dessen vertikale Seltenwände aus abgekanteten Wänden oder massiven Formteilen bildenden Wänden bestehen, die entweder mit den übrigen Gehäusewänden verschweißt oder verschraubt sind.

Bekannt sind somit Getriebegehäuse, bestehend aus abgekanteten Stahlblechwannen mit einem verschraubten oder verschweißten oberen Getriebedeckel, indem die Getriebekette und die Mähscheiben gelagert sind. Durch die Fertigungstechnik des Abkantens sind die Stahlblechwannen in ihrer Längserstreckung als Prisma ausgebildet, welches den Nachteil beinhaltet, dass die Form des Getriebegehäuses durch eben diese Fertigungstechnik stark eingeschränkt ist.

Dadurch bedingt sind beispielsweise die von den Flugkreisen der Messerklingen überdeckten Schnittflächen stärker eingeschränkt, als dieses zwingend notwendig wäre, so dass dieses das Mähbild insbesondere bei am Boden liegendem Grünfutter negativ beeinträchtigt, wodurch die unerwünschte Strelfenbildung durch ungleichmäßige Stoppellänge im Mähbild gefördert wird.

### Aufgabenstellung

Die Erfindung befasst sich mit dem Problem, das Getriebegehäuse der Mähbalken von Scheibenmähwerke so auszugestalten, dass es in seiner Formgebung keinerlei Beschränkungen durch die Fertigungstechnik unterworfen Ist.

### Lösung der Aufgabe

Gelöst wird die Aufgabe der Erfindung mit den kennzeichnenden Merkmalen des Anspruchs 1. Weitere vorteilhafte Ausgestaltungen der Erfindung sind den abhängigen Ansprüchen, der Beschreibung und den Flgurendarstellungen zu entnehmen.

Fließvorgängen im Werkstoff über die Streckgrenze hinaus verbunden ist, ist der Werkstoff zumindest partiell in den Bereichen, indem es zur plastischen Verformung bedingt durch eben diese Fertigungstechnik bereits hinsichtlich seiner Festigkeit bereist geschwächt. Diese Fertigungstechnik kann durchaus auch innere Trennungen des Materials in Form von Mikrorissen zur Folge haben, welches die Dauerfestigkeit und die elastische Verformbarkeit des Materials erheblich beeinträchtigen kann und somit zu vorzeitigem Ausfall des Bauteils führen kann.

Die erfindungsgemäße Ausgestaltung des Getriebegehäuses des Mähbalkens ist frei von derartigen Nachteilen und ist zudem in seiner Formgebung frei von allen Einschränkungen der Fertigungstechnik der Kaltverformung von Blechteilen, indem eben sowohl der Getriebewannenboden als auch der Getriebewannendeckel beispielsweise durch Laserschneiden aus einer Blechtafel herausgeschnitten werden kann und danach keiner Formveränderung mehr ausgesetzt wird. Dabei wird die umlaufende Seitenwand des Getriebegehäuses als separates Bauteil zwischen dem Getriebewannenboden und dem Getriebewannendeckel eingesetzt. Die Abdichtung gegen austretendes Getriebeöl kann entweder durch eingelegte plastisch verformbare Dichtstreifen erfolgen oder auch durch plastische aufspritzbare Dichtmasse, die zugleich als Dichtmasse und Kleber dient. Zusätzlich können alle Teile auch noch miteinander verschraubt oder vernietet sein.

Bedingt durch die freie Formgebung kann dadurch auch eine vergrößerte Schnittfläche zum Mähen des Grünfutters am Boden und damit eine große Angriffsfläche für die Mähklingen erzeugt werden.

Erreicht wird dieses, indem die vordere Kontur des Getriebegehäuses so ausgestaltet ist, dass die Zahnräder der Getriebekette möglichst eng von der Seitenwand wellenförmig umschlossen werden. Die damit einhergehende Schwächung des Flächenträgheitsmoments im Querschnitt des Getriebegehäuses wird durch eine verstärkte Seitenwand des Getriebegehäuses kompensiert. Dabei ist die Seitenwand als Hohlprofil ausgebildet. Das Hohlprofil kann dabei gleichzeitig als Kühlmittel führendes Element ausgebildet sein, welches dazu dienen kann, dem Getriebegehäuse die Abwärme des Getriebeöls zu entziehen, um somit die Lebensdauer des Getriebeöls zu erhöhen.

### Ausführungsbeispiel

Nähere Einzelheiten der Erfindung sind den nachfolgenden Figurendarstellungen und deren Beschreibungen zu entnehmen.

Es zeigen:
- Fig. 1: zeigt einen Mähbalken in einer Draufsicht mit offenem Getriebegehäuse, so dass die Antriebskette sichtbar ist
- Fig. 2: zeigt den Mähbalken in einer Ansicht von hinten entgegen der Fahrtrichtung
- Fig. 3: zeigt die Untenansicht des Mähbalkens
- Fig. 4: zeigt einen Ausschnitt aus der Untenansicht gemäß Ansicht X des Mähbalkens der Fig. 2 in perspektivischer Ansicht
- Fig. 5: zeigt den Ausschnitt analog Fig. 4, jedoch mit geöffnetem Getriebegehäuse, so dass ein Teil der Antriebskette sichtbar ist
- Fig. 6: zeigt einen Ausschnitt aus der Untenansicht gemäß Ansicht Y des Mähbalkens der Fig. 2 in perspektivischer Ansicht
- Fig. 7: zeigt den Ausschnitt analog Fig. 6, jedoch mit geöffnetem Getriebegehäuse, so dass ein Teil der Antriebskette sichtbar ist
- Fig. 8: zeigt die Ansicht Fig. 7 in diametraler Ansicht
- Fig.9: zeigt das Mähwerk gemäß Fig.1 in einer Draufsicht ohne Mähscheiben zur besseren Kenntlichmachung des wellenförmigen Verlaufs der Außenwand des Getriebegehäuses
- Fig.10: zeigt das Mähwerk gemäß Fig.1 in einer Draufsicht ohne Mähscheiben in vereinfachter Darstellung mit Kenntlichmachung des Zugewinns an Schnittfläche
- Fig.11: zeigt den Schnitt A-A durch den Mähbalken gemäß Fig.4
- Fig.12: zeigt den Schnitt A-A durch den Mähbalken gemäß Fig.4, jedoch mit einer alternativen Ausführung der vorderen Seitenwandausgestaltung
- Fig.13: zeigt die Einzelheit Z gemäß Fig.12 in vergrößerter Darstellung
- Fig.14: zeigt die Einzelheit Z gemäß Fig.12 in vergrößerter Darstellung jedoch mit einer alternativen Ausführung der vorderen Seitenwandausgestaltung als vollwandiger Querschnitt

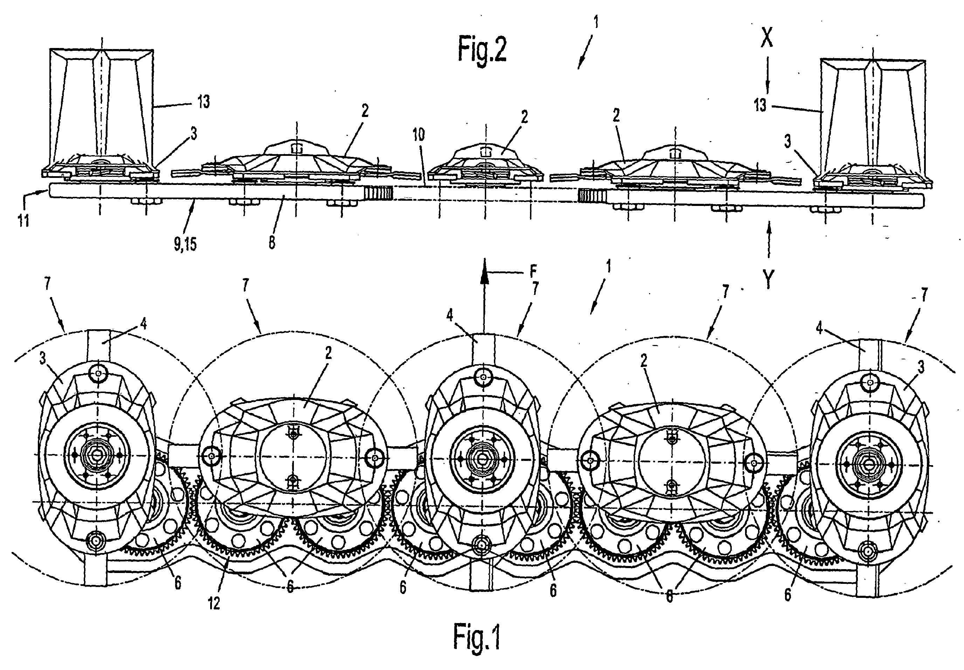

In Fig. 1 ist ein Mähbalken 1 in einer Draufsicht mit offenem Getriebegehäuse 8 dargestellt, so dass die Antriebskette 12 mit den Stirnrädern 6 sichtbar ist. Das offene Getriebegehäuse 8 dient lediglich der besseren Sichtbarmachung und Beschreibung der Antriebskette 12, bestehend aus den in Reihe liegenden Stirnrädern 6 einschließlich der Zahnritzel zum Antrieb der Mähscheiben 2. Die Antriebskette 12 besteht somit aus den Stirnrädern 6 und den Ritzeln 5, welche antriebsseitig mit dem Motor eines Trägerfahrzeugs in Verbindung stehen.

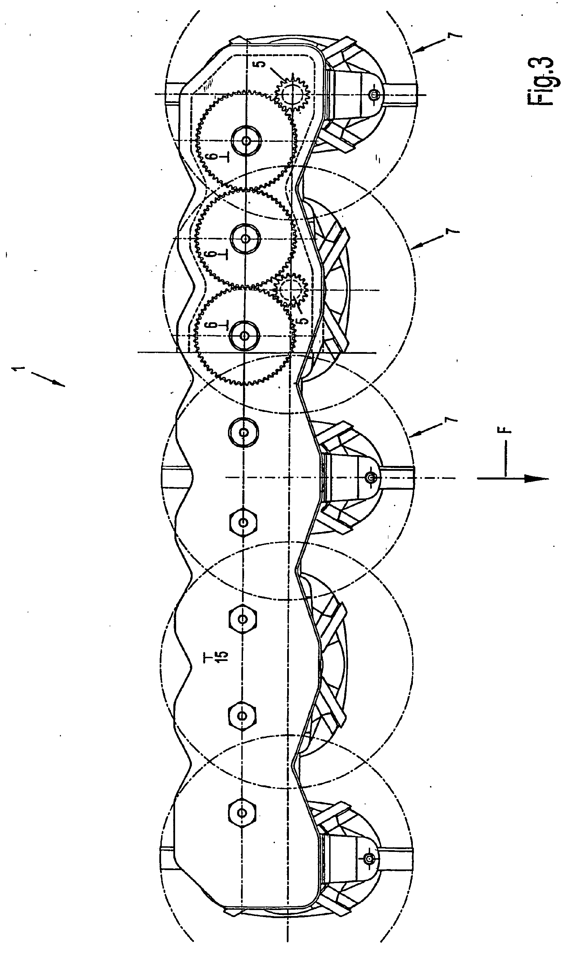

In Fig. 2 ist der Mähbalken 1 in einer Ansicht entgegen der Fahrtrichtung F von hinten, und in Fig. 3 die Untenansicht des Mähbalkens 1 dargestellt.

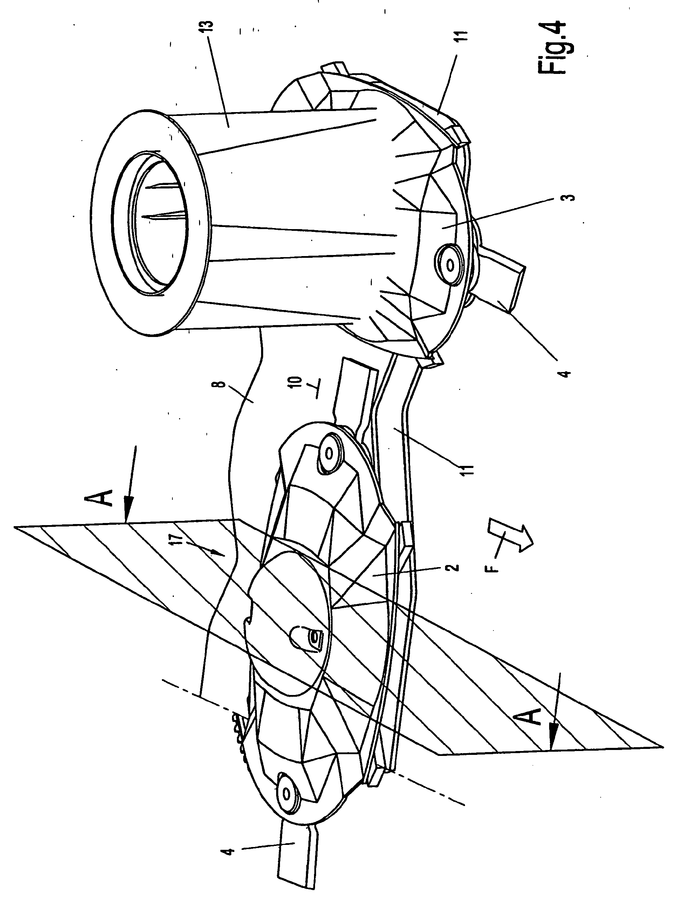

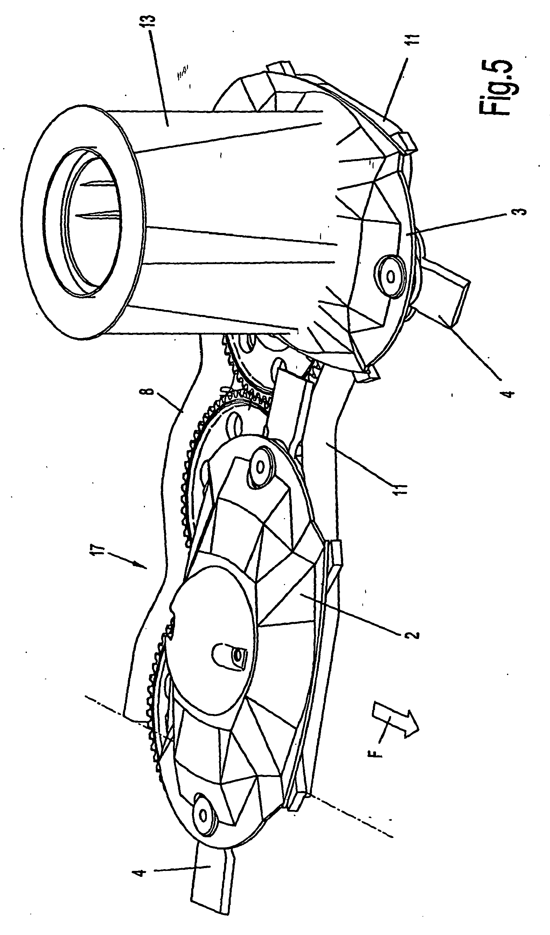

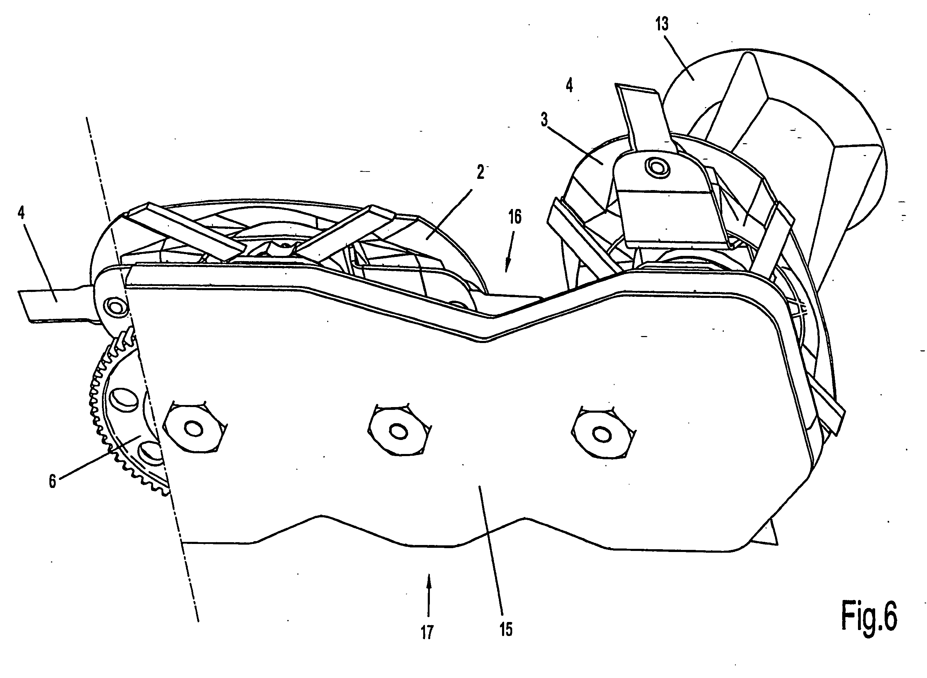

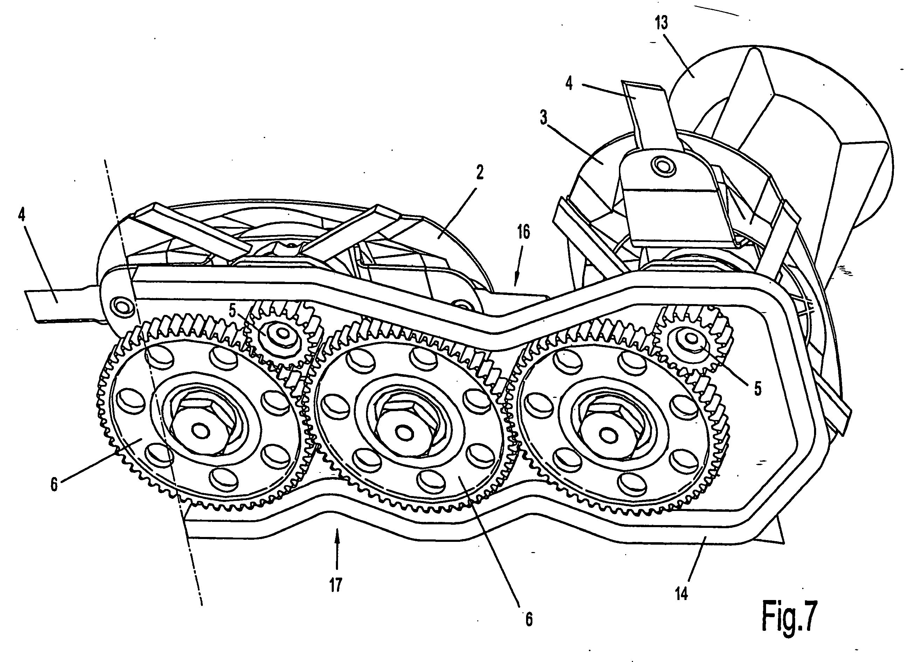

In Fig. 4 ist ein Ausschnitt aus der Untenansicht gemäß Ansicht X des Mähbalkens 1 der Fig. 2 in perspektivischer Ansicht, und in Fig. 5 ist analog der Fig. 4 das Getriebegehäuse in geöffnetem Zustand, jedoch mit geöffnetem Getriebegehäuse dargestellt, so dass ein Teil der Antriebskette sichtbar ist. In Fig. 6 ist ein Ausschnitt aus der Untenansicht gemäß Ansicht Y des Mähbalkens der Fig. 2 in perspektivischer Ansicht dargestellt und Fig. 7 zeigt den Ausschnitt analog Fig. 6, jedoch mit geöffnetem Getriebegehäuse 8, so dass ein Teil der Antriebskette 12, bestehend aus den Stirnrädern 6 und den Ritzeln 5, sichtbar ist.

Oberhalb des Mähbalkens 1 befinden sich in bekannter Anordnung die äußeren Mähscheiben 3 mit aufgesetzten Fördertrommeln 13 und den inneren Mähscheiben 2. Die äußeren und inneren Mähscheiben sind an ihrem Umfang in bekannter Weise mit Mähklingen 4 bestückt, deren äußere Kontur während des Umlaufs der Mähscheiben die Flugkreise 7 überstreichen. Die Antriebskette 12 besteht aus den Stirnrädern 6 und den Ritzeln 5, wobei die Ritzel 5 eine Antriebswelle aufweisen, welche im Getriebedeckel 9 des Getriebegehäuses 8 gelagert ist und wobei die Mähscheiben 2,3 mit dem jeweiligen Ritzel 5 eine drehfeste Verbindung eingehen.

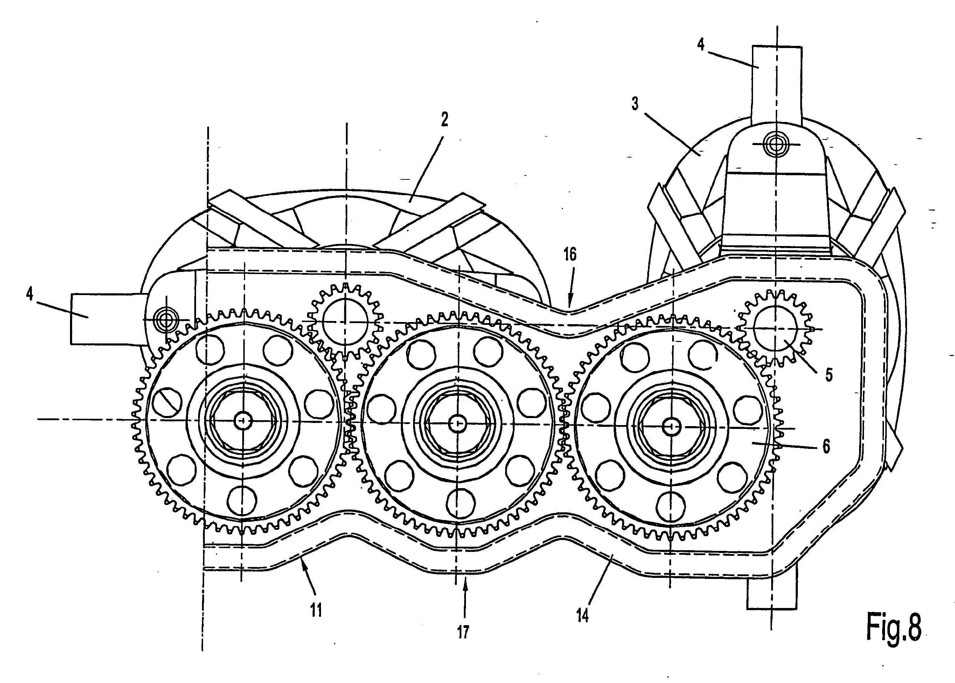

Die Getriebeseitenwand 11 des Getriebegehäuses 8 besteht aus einem Hohlprofil 14, welches wie in Fig. 7 bzw. Fig. 8 dargestellt, der Kontur der Antriebskette 12 folgend, diese umschließt. Dabei ist in Fig. 8 ein Ausschnitt aus dem Mähbalken 1 gemäß Fig. 2 die Ansicht Y ohne den Getriebewannenboden 15 dargestellt. In dem Ausführungsbeispiel ist das Hohlprofil 14 als Rechteckhohlprofil dargestellt. Das Hohlprofil 14 kann wahlweise entweder mit dem Getriebedeckel 10 oder mit dem Getriebewannenboden verschweißt sein, so dass Getriebewannenboden und Getriebedeckel beispielsweise miteinander verschraubt werden können. Möglich ist auch, dass Getriebewannenboden und Getriebewannendeckel nach der Montage der Getriebekette dauerhaft miteinander verschweißt werden. Dadurch bedingt, dass das Hohlprofil 14 als Getriebeseitenwand die Ritzel 5 und die Stirnräder 6 möglichst eng umschließt, können die Konturkreise der Mähklingen eine größere Fläche überdecken, als dieses der Fall wäre, wenn der Mähbalken an der Vorder- bzw. Hinterseite eine gerade verlaufende Kontur aufweisen würde.

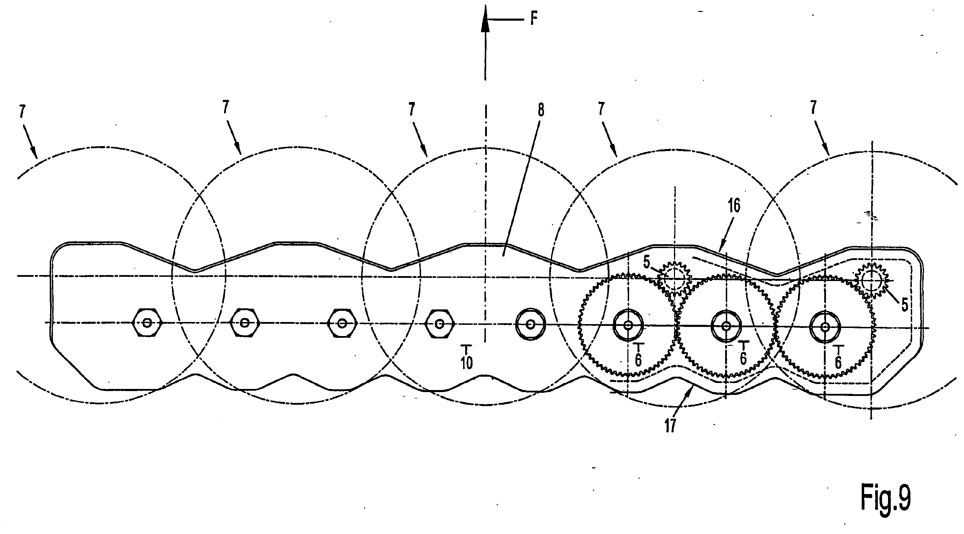

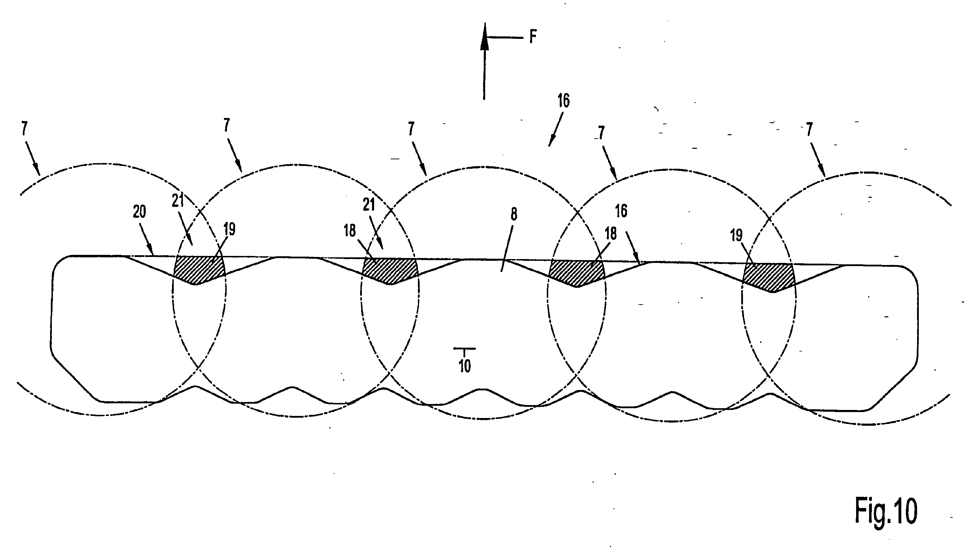

In Fig. 8 zeigt die Ansicht Fig. 7 in einer diametralen Ansicht und Fig.9 und Fig.10 zeigen das Mähwerk gemäß Fig.1 in einer Draufsicht ohne Mähscheiben. Fig.9 zeigt damit in anschaulicher Darstellung den wellenförmigen Verlauf der vorderen Kontur 16 und auch einen wellenförmigen Verlauf der hinteren Kontur 17 der Seitenwand 11 des Getriebegehäuses 8. Insbesondere in Fahrtrichtung F vor dem Getriebegehäuses 8 wird damit der schraffierte Zugewinn an Schnittfläche 18,19 in den Wellentälern 21 der vorderen Kontur 16 deutlich, welche von den umlaufenden Mähklingen 4 innerhalb der Konturkreises 7 liegend, zusätzlich gegenüber einer gerade verlaufenden Linie 20, welche die Abschlusskante eines abgekanteten Blechgehäuses bilden würde, überdeckt werden und somit von den Klingen mähtechnisch erreichbar sind.

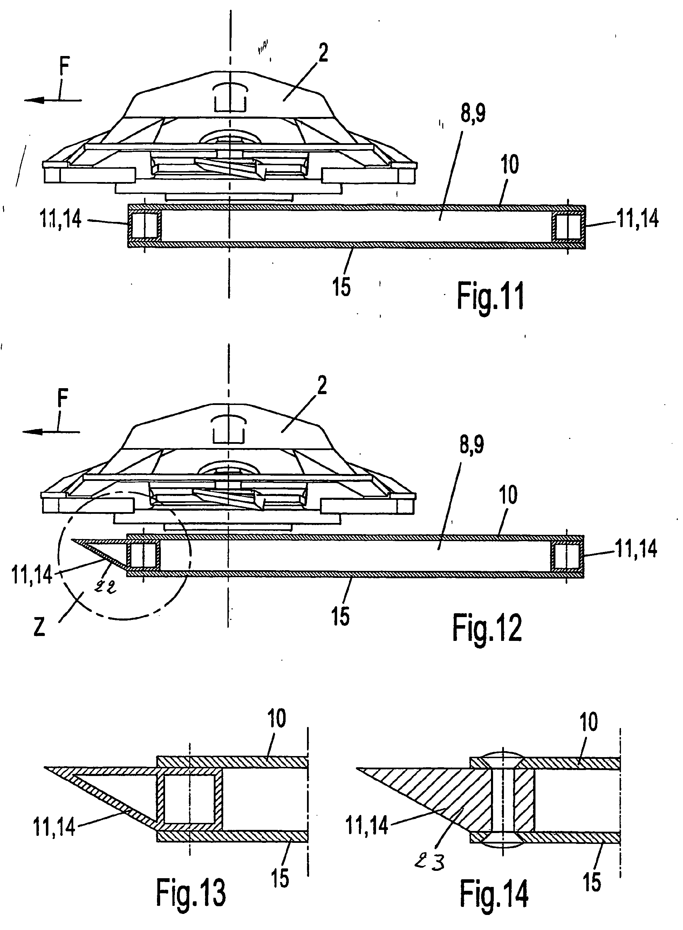

Fig.11 zeigt den Schnitt A-A durch den Mähbalken gemäß Fig.4, wobei die Getriebeseitenwand 11 des Getriebegehäuses 8 als Rechteck-Hohlprofil 14 ausgebildet ist. Fig.12 zeigt den Schnitt A-A durch den Mähbalken analog Fig.4, jedoch mit einer alternativen Ausführung der Ausgestaltung vorderen Seitenwand 11 als Hohlprofil 14 jedoch mit einer schrägen Abweisfläche 22, die das Übergleiten von Bodenunebenheiten durch geringere Wiederstandskräfte begünstigt. Fig.13 zeigt die Einzelheit Z gemäß Fig.12 in vergrößerter Darstellung und Fig.14 zeigt die Einzelheit Z gemäß Fig.12 in vergrößerter Darstellung jedoch mit einer nicht erfindungsgemäßen Ausführung der vorderen Seitenwandausgestaltung mit einem vollwandiger Querschnitt 23. Dabei ist der Getriebedeckel 10 und der Getriebewannenboden 15 mit der Getriebeseitenwand 11 mittels einer Nietverbindung 24 als Ausführungsbeispiel einer möglichen Verbindungstechnik dargestellt.

Getriebewannenboden (15), und Getriebedeckel (10) sind somit als planebene scheibenförmige Bauteile ausgebildet sind, welche die Getriebeseitenwand (11) nach der Sandwichbauweise zwischen sich aufnehmen.

Getriebewannenboden (15), Getriebeseitenwand (11) und Getriebedeckel (10) können als separate Einzelteile ausgebildet, die lösbar zusammengefügt, das Getriebegehäuse (8) bilden.

Wahlweise kann die Getriebewanne (9) auch lösbar zusammengefügt sein mit dem Getriebedeckel (10) das Getriebegehäuse (8) oder alternativ können Getriebewannenboden (15) und Getriebeseitenwand (11) ebenso eine unlösbar miteinander verbundene Einheit als Getriebewanne (9) bilden.

Ebenso ist es auch möglich, dass Getriebedeckel (10) und Getriebeseitenwand (11) eine unlösbar miteinander verbundene Einheit bilden die aber mit dem Getriebeboden (15) wiederum eine lösbare Einheit bilden.

In einer weiteren Ausgestaltungsmöglichkeit können Getriebewannenboden (15), Getriebeseitenwand (11) und Getriebedeckel (10) separate Einzelteile bilden, die unlösbar zusammengefügt, das Getriebegehäuse (8) bilden.

Dabei kann die unlösbare Verbindung beispielsweise eine Schweissverbindung oder eine .Klebeverbindung sein oder auch eine Mischverbindung aus Klebeverbindung oder Vernietung sein.

### Bezugszeichenliste

- 1: Mähbalken
- 2: innere Mähscheibe
- 3: äußere Mähscheibe
- 4: Mähklinge
- 5: Ritzel
- 6: Stirnräder
- 7: Flugkreis
- 8: Getriebegehäuse
- 9: Getriebewanne
- 10: Getriebedeckel
- 11: Getriebeseitenwand
- 12: Antriebskette
- 13: Fördertrommel
- 14: Hohlprofil
- 15: Getriebewannenboden
- 16: vordere Kontur
- 17: hintere Kontur
- 18: Zugewinn an Schnittfläche
- 19: Zugewinn an Schnittfläche
- 20: gerade Linie
- 21: Wellental
- 22: schrägen Abweisfläche
- 23: vollwandiger Querschnitt
- 24: Nietverbindung

- F: Fahrtrichtung

## Patentansprüche

1. Scheibenmähwerk zum Anbau an ein Trägerfahrzeug, beispielsweise für einen Traktor oder für ein selbstfahrendes Trägerfahrzeug, mit mehreren um aufrechte Kreiselachsen umlaufend angetriebenen mit Mähklingen (4) besetzten Mähscheiben (2,3), die In einem aus plattenförmig geformten Wänden umfassenden Getriebegehäuse (8) eines Mähbalkens (1) unterhalb der Mähschelben gelagert sind, und die von einer aus Zahnrädern gebildeten Antriebskette (12), welche sich Innerhalb des Getriebegehäuses (8) befinden und in diesem gelagert sind, angetrieben werden, **dadurch gekennzeichnet, dass** die Getriebeseltenwand (11) aus einem Hohlprofil besteht.

2. Scheibenmähwerk nach Anspruch 1, **dadurch gekennzeichnet, dass** das Hohlprofil aus einem Rechteckholprofil besteht.

3. Scheibenmähwerk nach Anspruch 1 bis 2, **dadurch gekennzeichnet, dass** Getriebewannenboden (15), Getriebeseitenwand (11) und Getriebedeckel (10) separate Einzeltelle bilden, die lösbar zusammengefügt, das Getriebegehäuse (8) bilden.

4. Scheibenmähwerk nach Anspruch 3, **dadurch gekennzeichnet, dass** die Getriebewanne (9) lösbar zusammengefügt mit dem Getriebedeckel (10) das Getriebegehäuse (8) bilden.

5. Scheibenmähwerk nach Anspruch 1 bis 3, **dadurch gekennzeichnet, dass** Getrlebewannenboden (15) und Getriebeseitenwand (11) eine unlösbar miteinander verbundene Einheit als Getriebewanne (9) bilden.

6. Scheibenmähwerk nach Anspruch 1 bis 3, **dadurch gekennzeichnet, dass** Getriebedeckel (10) und Getriebeseitenwand (11) eine unlösbar miteinander verbundene Einheit bilden die mit dem Getriebeboden (15) eine lösbare Einheit bilden.

7. Scheibenmähwerk nach Anspruch 1 bis 4, **dadurch gekennzeichnet, dass** Getriebewannenboden (15), Getriebeseitenwand (11) und Getriebedeckel (10) separate Einzelteile bilden, die unlösbar zusammengefügt, das Getriebegehäuse (8) bilden.

8. Scheibenmähwerk nach Anspruch 7, **dadurch gekennzeichnet, dass** die unlösbare Verbindung eine Schweissverbindung darstellt.

9. Scheibenmähwerk nach Anspruch 7, **dadurch gekennzeichnet, dass** die unlösbare Verbindung eine Klebeverbindung darstellt.

10. Scheibenmähwerk nach Anspruch 7, **dadurch gekennzeichnet, dass** die unlösbare Verbindung eine Klebeverbindung in Verbindung mit einer Nietverbindung (24) darstellt.

11. Scheibenmähwerk nach Anspruch 1 bis 10, **dadurch gekennzeichnet, dass** die Seltenwand 11 eine schräge Abwelsfläche (22) aufweist.

## Claims

1. A disc mowing mechanism for mounting to a carrier vehicle, for example for a tractor or a self-propelled carrier vehicle, comprising a plurality of mowing discs (2, 3) which are driven in rotation about perpendicular axes of rotation and which are fitted with mowing blades (4) and which are mounted in a transmission housing (8), including walls shaped in a plate shape, of a mowing bar (1) beneath the mowing discs, and which are driven by a drive train (12) formed from gcars which arc disposed within the transmission housing (8) and are mounted therein, **characterised in that** the transmission side wall (11) comprises a hollow profile.

2. A disc mowing mechanism according to claim 1 **characterised in that** the hollow profile comprises a hollow rectangular profile.

3. A disc mowing mechanism according to claim 1 or claim 2 **characterised in that** the transmission trough base (15), the transmission side wall (11) and the transmission cover (10) form separate individual parts which releasably assembled form the transmission housing (8).

4. A disc mowing mechanism according to claim 3 **characterised in that** the transmission trough (9) releasably assembled to the transmission cover (10) forms the transmission housing (8).

5. A disc mowing mechanism according to claims 1 to 3 **characterised in that** the transmission trough base (15) and the transmission side wall (11) form a non-releasably interconnected unit as the transmission trough (9).

6. A disc mowing mechanism according to claims I to 3 **characterised in that** the transmission cover (10) and the transmission side wall (11) form a non-releasably interconnected unit which with the transmission base (15) form a releasable unit.

7. A disc mowing mechanism according to claims 1 to 4 **characterised in that** the transmission trough base (15), the transmission side wall (11) and the transmission cover (10) form separate individual parts which non-releasably assembled form the transmission housing (8).

8. A disc mowing mechanism according to claim 7 **characterised in that** the non-releasable connection represents a welded connection.

9. A disc mowing mechanism according to claim 7 **characterised in that** the non-releasable connection represents an adhesive connection.

10. A disc mowing mechanism according to claim 7 **characterised in that** the non-releasable connection represents an adhesive connection in conjunction with a rivet connection (24).

11. A disc mowing mechanism according to claims 1 to 10 **characterised in that** the side wall (11) has an inclined deflection surface (22).

## Revendications

1. Mécanisme de coupe à disques à monter sur un vésicule porteur, par exemple pour un tracteur ou pour un véhicule porteur automoteur, comprenant plusieurs disques de coupe (2, 3) qui sont garnis de couteaux (4) et entraînés en rotation sur des axes de disques verticaux implantées sur un carter de transmission (8) d'une barre de coupe (1) disposé sous les disques de coupe et comprenant des parois en forme de plaques et qui sont entraînés par une chaîne d'entraînement (12) formée de roues dentées logées et tournant à l'intérieur du carter de transmission (8), **caractérisé en ce que** la paroi latérale de transmission (11) est constituée par un profilé creux.

2. Mécanisme de coupe à disques selon la revendication 1, **caractérisé en ce que** le profilé creux est constitué par un profilé creux rectangulaire.

3. Mécanisme de coupe à disques selon la revendication 1, **caractérisé en ce que** le fond de cuvette de transmission (15), la paroi latérale de transmission (11) et le couvercle de transmission (10) constituent des éléments individuels séparés qui, une fois assemblés de manière détachable, forment le carter de transmission (8).

4. Mécanisme de coupe à disques selon la revendication 3, **caractérisé en ce que,** une fois assemblés de manière détachable, la cuvette de transmission (9) et le couvercle de transmission (10) forment le carter de transmission (8).

5. Mécanisme de coupe disques selon la revendication 1 à 3, **caractérisé en ce que** le fond de curette de transmission (15) et la paroi latérale de transmission (11) forment une unité assemblée de manière non séparable en forme de cuvette de transmission (9).

6. Mécanisme de coupe à disques selon la revendication 1 à 3, **caractérisé en ce que** le couvercle de transmission (10) et la paroi latérale de transmission (11) forment une unité assemblée de manière non séparable, laquelle forme, avec le fond de transmission (15), une unité séparable.

7. Mécanisme de coupe à disques selon la revendication 1 à 3, **caractérisé en ce que** le fond de cuvette de transmission (15), la paroi latérale de transmission (11) et le couvercle de transmission (10) forment des éléments individuels séparés qui, une fois assemblés de manière non réparable, forment le carter de transmission (8).

8. Mécanisme de coupe à disques selon la revendication 7, **caractérisé en ce que** la liaison non séparable est constituée par une liaison soudée.

9. Mécanisme de coupe à disques selon la revendication 7, **caractérisé en ce que** la liaison non réparable est constituée par une liaison collée.

10. Mécanisme de coupe à disques selon la revendication 7, **caractérisé en ce que** la liaison non séparable est constituée par une liaison collée associée à une liaison rivetée (24).

11. Mécanisme de coupe à disques selon la revendication 1 à 10, **caractérisé en ce que** la paroi latérale 11 présente une surface réflectrice inclinée (22).
